# EUROPÄISCHE PATENTSCHRIFT

(11) **EP 2 948 732 B1**
(45) Veröffentlichungstag und Bekanntmachung des Hinweises auf die Patenterteilung: **12.07.2017**
(21) Anmeldenummer: 14701913.7
(22) Anmeldetag: 21.01.2014
(51) Int. Cl.: G01B 11/00, G02B 27/30, G01B 11/02, G02B 27/62, G01M 11/02, G01B 11/26

(54) **SYSTEM ZUR LAGEBESTIMMUNG EINES PRÜFOBJEKTES**
SYSTEM FOR DETERMINING THE POSITION OF A TEST OBJECT
SYSTÈME DE DÉTERMINATION DE LA POSITION D'UN OBJET À CONTRÔLER

(30) Priorität: 23.01.2013 DE 102013001458
(43) Veröffentlichungstag der Anmeldung: 02.12.2015
(73) Patentinhaber: JENOPTIK Optical Systems GmbH, 07745 Jena (DE); Trioptics GmbH, 22880 Wedel (DE)
(72) Erfinder: FRANZ, Stefan, 07751 Jena (DE)
(74) Vertreter: Waldauf, Alexander
(86) Internationale Anmeldenummer: PCT/EP2014/000148
(87) Internationale Veröffentlichungsnummer: WO 2014/114444

(56) Entgegenhaltungen:
- EP-A1- 2 458 363
- GB-A- 1 305 925
- US-A1- 2005 128 468

## Beschreibung

Die vorliegende Erfindung bezieht sich auf ein System zur Lagebestimmung eines Prüfobjektes gemäß Patentanspruch 1.

Aus dem Stand der Technik sind Fokussiereinrichtungen und Autokollimationsfernrohre (AKF) zum Ausmessen von Ort-, Winkel- und Winkeländerungen beziehungsweise von Zentrierfehlern von Linsen und Linsensystemen bekannt, bei dem mit Hilfe eines Strahlenteilers und einem als Kollimator und Fernrohr wirkenden Objektiv ein geeignetes projiziertes Bild nach Reflexion an der zu untersuchenden Fläche ausgewertet wird. Als Auswerteeinheit sind beispielsweise zweidimensionale Sensoreinheiten bekannt oder im klassischen Fall das menschliche Auge. Ist der Krümmungsmittelpunkt der untersuchten Fläche (Sphäre) nicht exakt auf der Bezugsachse, so treffen die Beleuchtungsstrahlen nicht senkrecht auf die Prüflingsoberfläche. Das hat zur Folge, dass sie nach der Reflektion an der Prüflingsoberfläche nicht in sich selbst zurücklaufen, sondern unter einem Reflexionswinkel, der von 90° zur Oberfläche abweicht, zurückgeworfen werden. Die Abweichung ist direkt proportional zum Zentrierfehler der untersuchten Fläche (Sphäre).

Für die Beschreibung der Lage einer Linse oder eines Kittglieds oder eine Gruppe von Elementen müssen hierbei zwei Flächen angemessen werden. Will man den Bezug zu weiteren Flächen herstellen, müssen auch diese weiteren Flächen angemessen werden. Diese Aufgabe ist gleichbedeutend mit der Aufgabe, das Bild einer Marke auf jeden beliebigen Ort entlang einer optischen Achse abzubilden. Zur Lösung dieser Aufgabe ist aus dem Stand der Technik bekannt, austauschbare Vorsatzoptiken zu verwenden oder die Abbildungsentfernung des AKF über eine interne Fokussierung zu ändern (z.B. über längs der optischen Achse verschiebbare Linsen oder Linsengruppen) oder über eine Änderung des Abstandes (Linearführung) zwischen dem Autokollimationsfernrohr und der zu untersuchenden Fläche (Prüfling oder Prüfobjekt) zu erreichen, dass das Bild aus dem Reflex der zu untersuchenden Fläche einer Marke aus dem Autokollimationsfernrohr wieder in der Ebene der Marke erscheint, sodass ihn eine Detektionseinheit empfangen kann. Derartige oder ähnliche Systeme sind beispielsweise aus der EP 2 458 363 A1, der US 2005/0128468 A1 und der GB 1 305 925 bekannt.

Die DE 10 2005 013 755 B4 offenbart beispielsweise einen Autokollimationskopf zur Zentrierfehlermessung mit einer zweidimensionalen Sensoreinheit. Der Autokollimationskopf weist neben der Sensoreinheit noch eine Strahlteilerplatte, eine beleuchtete Strichplatte, eine Objektivlinse und eine zusätzliche Linse zum Fokussieren auf. Die zweidimensionale Sensoreinheit ist präzise in der Bildebene des Autokollimatorobjektives positioniert. Der gesamte Aufbau ist an einem Gestell montiert. Der obere Messkopf einschließlich Linearführung ist über dem Tisch montiert und der untere Messkopf mit Linearführung befindet sich unter dem Tisch. Die beiden Messköpfe können hierbei über entsprechende Linearführungen entlang einer Achse geführt werden, die in etwa mit der Bezugsachse übereinstimmt. Der Prüfling kann um die Bezugsachse rotiert werden.

Es ist daher Aufgabe der vorliegenden Erfindung ein verbessertes System zur Verfügung zu stellen, das insbesondere ohne Linearführungen und Wechseloptiken auskommt und zudem eine beschleunigte Vermessung einer Oberfläche eines Prüfobjektes, um beispielsweise daraus etwaige Zentrierfehler abzuleiten, bereitstellen kann. Diese Aufgabe wird durch ein System zur Lagebestimmung eines Prüfobjektes gemäß Anspruch 1. Vorteilhafte Weiterbildungen werden durch die abhängigen Ansprüche näher definiert.

In einem Grundgedanken der Erfindung weist ein System zur Lagebestimmung eines Prüfobjektes folgende Merkmale auf: ein Autokollimationsfernrohr mit einer Strahlquelle zum Aussenden eines Strahlenbündels; einem Strahlteiler; einer Detektoreinheit und einem Objektiv; und einem als Fokussiereinrichtung ausgebildetem optischen Element, wobei das Prüfobjekt, die Strahlquelle und die Fokussiereinrichtung entlang einer gemeinsamen optischen Achse (z) angeordnet sind und einer Steuereinrichtung zum Steuern der Fokussiereinrichtung, die derart ausgebildet ist, dass das Strahlenbündel auf einen Krümmungsmittelpunkt einer ersten Prüffläche des Prüfobjektes mit den Koordinaten (x1, y1) und zumindest auf einen Krümmungsmittelpunkt einer zweiten Prüffläche des Prüfobjektes mit den Koordinaten (x2, y2) fokussierbar ist.

Die Prüffläche ist bevorzugt sphärisch ausgebildet. Die erfindungsgemäße Betrachtung gilt jedoch auch für die Sonderfälle "Planfläche" und "Asphäre". Im Sonderfall der Planfläche liegt das Äquivalent des Krümmungsmittelpunktes als Richtung der Normalen der Planfläche ebenfalls mit den Koordinaten x1 und y1 vor. Im zweiten Sonderfall ist die asphärische Fläche lokal als sphärische Fläche anzunähern. Mit dieser lokalen Betrachtung existiert wiederum ein lokaler Krümmungsmittelpunkt, der für die vorliegende Betrachtung so behandelt wird, wie der Krümmungsmittelpunkt einer regulären Sphäre.

Es existiert somit ein Krümmungsmittelpunkt, der in einem Abstand vor oder hinter der Prüffläche liegt. Dieser Punkt wird für die reale oder imaginäre Abbildung einer Marke oder Messstruktur wirksam. Die Prüffläche wird somit beschrieben durch ihre Parameter "Lage des Krümmungsmittelpunktes" und "Radius der Kugel". Im Folgenden wird der Begriff "Prüffläche" auch synonym für ihre maßgeblichen Parameter verwendet.

Durch die zeitlich rasch aufeinanderfolgende Fokussierung der Fokussiereinrichtung auf zumindest zwei Prüfflächen wird erreicht, dass "quasi gleichzeitig" die Lage beziehungsweise eine Veränderung der Lage der beiden Prüfflächen bestimmt werden kann. Somit ist es insgesamt möglich, die Lage des Prüfobjektes zu bestimmen. Auf zusätzliche Optiken oder Linearführungen kann erfindungsgemäß verzichtet werden. Damit kann die Justage von Prüfobjekten, beispielsweise optischen Bauteilen, nicht nur beschleunigt, sondern auch qualitativ verbessert werden. Weiterhin sind die notwendigen Bauteile bevorzugt rotationssymmetrisch und klein. Dies hat als weiteren Vorteil einen begrenzten Bauraum zur Folge.

Die Möglichkeit das System zu verkleinern und auf eine Rotation zu verzichten ermöglicht es, das Zentrierverfahren auch dann zur Anwendung zu bringen, wenn das Prüfobjekt z.B. wegen seiner Größe oder aufgrund von Strahlfaltungen, die die Zugänglichkeit für eine externen Einblick des AKF einschränken, nicht auf einem Drehtisch montiert werden kann.

Im Unterschied zum Stand der Technik wird also mittels der Steuereinrichtung zum Steuern der Fokussiereinrichtung nicht die Fokussiereinrichtung als solche verschoben. Es wird im Gegensatz dazu mittels der Steuereinrichtung die optische Eigenschaft, insbesondere die Brechkraft der Fokussiereinrichtung verändert, um auf verschiedene Krümmungsmittelpunkte von zu prüfenden Flächen fokussieren zu können.

Erfindungsgemäß wird unter einem Prüfobjekt ein einziges Prüfobjekt oder ein aus mehreren Teilprüfobjekten zusammengesetztes Gesamtprüfobjekt verstanden. Beispielsweise kann es sich bei dem zweiten Fall um einen Achromaten handeln, der aus zwei, drei oder einer Vielzahl von Linsenelementen besteht, die flächig miteinander verkittet oder über Fassungen miteinander verbunden sind.

In einer bevorzugten Ausführungsform umfasst das Autokollimationsfernrohr ferner eine Messstruktur. Somit ist es möglich, mittels der Messstruktur ein auswertbares Bild auf die Detektoreinheit abzubilden. Als Detektoreinheit kann erfindungsgemäß jedes Bauteil zur Messung elektromagnetischer Strahlung verstanden werden (z.B. ein CCD-Sensor oder eine Kamera).

Ist das Prüfobjekt eine Einzellinse bedeutet das folgendes: Aus der Lage der zwei Bilder, die quasigleichzeitig oder im Falle der Verwendung von zwei Lichtfarben zur Beleuchtung auch tatsächlich gleichzeitig auf der Kamera gesehen werden, kann die Lage der Linsenmitte und die Kippung der Linsenachse ebenso schnell berechnet und als Mess- bzw. Steuersignal zur Verfügung gestellt werden.

In einer weiteren bevorzugten Ausführungsform umfasst die Steuereinheit eine Rechnereinheit und/ oder eine Darstellungseinheit. Somit ist es mit einer Einheit möglich sowohl die Fokussiereinrichtung zu steuern als auch aus den gewonnenen Messwerten eine Lage des Prüfobjektes mittels der Rechnereinheit abzuleiten und die Lage des Prüfobjektes in einer Darstellungseinheit darzustellen.

Erfindungsgemäß ist die Fokussiereinrichtung als Linse mit einer einstellbaren Brechkraft, insbesondere als elektrische veränderliche Linse, ausgebildet. Die Brechkraft derartiger Linsen kann sehr schnell durch eine entsprechende Steuereinrichtung verändert werden.

Die Fokussiereinrichtung unterscheidet sich vom bekannten Stand der Technik in dieser Ausführungsform dadurch, dass sie ohne eine mechanische Bewegung von Linsen oder Linsensystemen auskommt. Durch die bevorzugte Verwendung von optischen Elementen mit einer auf elektrischem Wege direkt veränderbaren Brennweite wird eine kurze Umschaltzeit zwischen den einzelnen Fokussierzuständen erreicht.

Die Vorrichtung ist damit einfacher aufgebaut als die bisher bekannten, sie arbeitet schneller, da Nebenzeiten entfallen bzw. verringert werden und es wird möglich, andere Algorithmen für einen Justageablauf zu verwenden, die eine weitere Verringerung der Justagedauer ermöglichen, indem weniger Iterationszyklen notwendig werden.

Wenn das Prüfobjekt auf der gemeinsamen optischen Achse liegt, entstehen die realen oder virtuellen Bilder der direkt in den Krümmungsmittelpunkten der Prüfflächen. Solange das Prüfobjekt noch nicht ausgerichtet ist, treffen die Strahlenbündel aus dem Autokollimationsfernrohr nicht senkrecht auf die Prüffläche. Das reale oder virtuelle Bild entsteht dann in derselben Entfernung aber seitlich versetzt zur optischen Achse des Autokollimationsfernrohrs. Dieser Seitenversatz, der erfindungsgemäß für zwei Prüfflächen mit d1 und d2 bezeichnet wird, wird vom Autokollimationsfernrohr auf der Detektoreinheit beobachtet und liegt so als Messinformation vor. Diese Information kann zu Prüfzwecken ausgewertet werden oder mit Hilfe dieser Information können die Prüfflächen geeignet beeinflusst, d.h. verschoben bzw. gekippt werden, so dass die Prüffläche mit ihrem Krümmungsmittelpunkt auf der gemeinsamen optischen Achse zum Liegen kommt. So kann der in den später gezeigten Figuren dargestellte Idealfall erreicht werden. Auf diesem Wege kann man die Toleranzen der Lage der Prüfflächen minimieren. Aus den fehlerbehafteten Koordinaten (x1, y1, z1), in denen man die Lage der Foki oder die Lage des Krümmungsmittelpunktes angeben kann werden so die Koordinaten (0, 0, z1), die dann für die Foki und den Krümmungsmittelpunkt übereinstimmen.

Diese Transformation beschreibt eine wesentliche Anwendung der Erfindung. Die Möglichkeit der quasiparallelen Darstellung der Lage von Krümmungsmittelpunkten in unterschiedlichen Entfernungen eröffnet aber neue Möglichkeiten der Justage. Die Änderung der Lage einer Fläche ändert die scheinbare, d.h. vom Autokollimationsfernrohr gesehene Lage des dahinter gesehenen Krümmungsmittelpunktes. Für die klassische Montage ist es deshalb vorteilhaft, mit der Montage von der Seite des Autokollimationsfernrohrs aus zu beginnen. Für die Analyse der weiter vom Autokollimationsfernrohr entfernten Flächen müssen stets alle Flächen neu gemessen werden. Die Messdauer wird dann nicht nur durch das Ändern des Fokusabstandes verlängert, sondern insbesondere durch die Notwendigkeit der vollständigen Messung aller Flächen, bzw. der Neuberechnung des Justageziels.

Mit der quasigleichzeitigen Darstellung der Lage verschiedener Krümmungsmittelpunkte beschleunigt sich nicht nur der Mess- bzw. Montageablauf. Man kann andere Reihenfolgen sinnvoll anwenden und damit eine weitere Vereinfachung des Ablaufs erreichen. Man "sieht" praktisch gleichzeitig die Auswirkung einer Änderung auf die scheinbare Lage der Krümmungsmittelpunkte. Eine Berechnung der Lage von Flächen ist nicht zwingend notwendig. Man kann z.b. einen einfachen Algorithmus anwenden, dessen Ziel es ist, "alle Bilder Messstrukturen einander anzunähern". Dafür ist eine genaue Berechnung über die Kenntnis des Aufbaus des Prüfobjektes nicht notwendig.

In einer weiteren bevorzugten Ausführungsform ist eine weitere Vorsatzlinse entlang der optischen Achse (z) vorgesehen ist, die zwischen dem Objektiv und der Fokussiereinrichtung angeordnet ist. Insbesondere kommt diese Vorsatzlinse dann zum Einsatz, falls die minimale Brechkraft der Fokussiereinrichtung von 0 verschieden ist. Mit der Vorsatzlinse kann damit ein Fokussierbereich voreingestellt werden. Bevorzugt ist die Vorsatzlinse in einer weiteren Ausführungsform entlang der optischen Achse (z) verschiebbar angeordnet.

Alternativ ist es auch denkbar, dass zumindest zwei Vorsatzlinsen in einer Auswechseleinheit angeordnet sind, und je nach Anwendungsfall die erste oder die zweite Vorsatzlinse zum Einsatz kommt, wobei die erste und die zweite Vorsatzlinse eine unterschiedliche Brechkraft aufweisen

In einer weiteren bevorzugten Ausführungsform ist das Prüfobjekt auf einem Drehtisch angeordnet, wobei der Drehtisch um die optische Achse (z) drehbar gelagert ist. Ist das Prüfobjekt perfekt zu einer Bezugsachse, z.B. der optischen Achse (z) ausgerichtet, treffen die einzelnen Lichtstrahlen des Strahlenbündels immer unter demselben Winkel auf die Oberfläche des Prüfobjektes. Das heißt, dass auch bei einer Drehung des Prüfobjektes um die Bezugsachse das Bild auf der Detektoreinheit, beispielsweise einem CCD-Sensor, auf derselben Stelle erscheint.

In einer weiteren bevorzugten Ausführungsform sind die Fokussiereinrichtung und das Autokollimationsfernrohr als eine Baueinheit ausgebildet. Somit kann zusätzlicher Bauraum eingespart werden.

In einer weiteren bevorzugten Ausführungsform weist die Strahlquelle eine erste Leuchtdiode, die Licht mit einer ersten Farbe abstrahlt und eine zweite Leuchtdiode, die Licht mit einer von der ersten Farbe verschiedenen zweiten Farbe abstrahlt, auf. Die Verwendung von weiteren Leuchtdioden mit weiteren Farben kann bevorzugt für die Messung von mehreren Prüfobjekten mit mehreren Grenzflächen vorteilhaft sein.

Bevorzugt erfolgt das Fokussieren des Strahlenbündels auf die erste und zweite Prüffläche im Videotakt mit einer Frequenz in einem Bereich zwischen 1 und 50 Hz, bevorzugt in einem Bereich zwischen 20 und 30 Hz, besonders bevorzugt bei 25 Hz. Durch dieses schnelle Umschalten der durch die Steuereinrichtung gesteuerten Fokussiereinrichtung kann quasi in "Echtzeit" in weiterer Folge die Lage des Prüfobjektes durch die Darstellungseinheit dargestellt werden.

Bei der Verwendung mehrfarbiger Lichtquellen kann man mit einem angepassten Schaltschema die Lage mehrere Prüfflächen tatsächlich gleichzeitig erreichen. Am Beispiel einer Einzellinse mit zwei Prüfflächen wird dieses Schema so beschrieben: Mit dem Start der Belichtungszeit eines Videobildes wird zunächst eine der Beleuchtungsfarben, z.B. grün, eingeschaltet und die Fokussierung auf eine der Prüfflächen eingestellt. Nach der Hälfte der Belichtungszeit wird die Beleuchtung auf die zweite Lichtfarbe z.B. rot, eingestellt und gleichzeitig die Fokussierung für die zweite Prüffläche eingeschaltet. Beim Auslesen des Kamerabildes von einer Farbkamera stehen somit in den beiden Farbkanälen zwei unterschiedliche Messbilder bereit, die parallel ausgewertet werden können. Ein Videobild reicht somit zur vollständigen Lagemessung einer Linse. Für mehrere Prüfflächen ist der Ablauf entsprechend anzupassen.

Ferner beansprucht die Erfindung auch ein Verfahren zur Lagebestimmung eines Prüfobjektes mit einem erfindungsgemäßen System mit folgenden Merkmalen: Bereitstellen eines Prüfobjektes; Fokussieren eines Strahlenbündels mittels der Fokussiereinrichtung auf einen Krümmungsmittelpunkt einer ersten Prüffläche; Generierung eines ersten Messwertes; Fokussieren des Strahlenbündels mittels der Fokussiereinrichtung auf einen Krümmungsmittelpunkt einer zweiten Prüffläche; Generierung eines zweiten Messwertes; Auswerten des ersten und zweiten Messwertes mittels der Rechnereinheit.

In einer bevorzugten Ausführungsform wird erfindungsgemäß die erste Prüffläche mit der ersten Leuchtdiode und die zweite Prüffläche mit der zweiten Leuchtdiode bestrahlt. Bevorzugt ist hierbei vorgesehen, dass das Fokussieren des Strahlenbündels mittels der Fokussiereinrichtung auf die erste Prüffläche und zweite Prüffläche und ein Umschalten von der ersten auf die zweite Leuchtdiode synchron erfolgt. Somit wird erreicht, dass das Bild der Messstruktur mit unterschiedlichen Farben auf der Detektoreinheit abgebildet wird und somit insgesamt die Anzeige auch ergonomisch verbessert wird.

Erfindungsgemäß umfassen die Schritte der Generierung eines ersten und zweiten Messwertes folgende Merkmale: Aufnehmen eines ersten Bildes mittels der Detektoreinheit, wobei das Bild einem Reflex der Messstruktur an der ersten Prüffläche (x1, y1) entspricht; Aufnehmen eines zweiten Bildes mittels der Detektoreinheit, wobei das Bild einem Reflex der Messstruktur an der zweiten Prüffläche (x2, y2) entspricht.

Erfindungsgemäß umfasst ferner der Schritt des Auswertens folgende Merkmale: Ableiten einer Lage des Prüfobjektes (xL, yL) mittels der Rechnereinheit anhand der durch die Detektoreinheit ermittelten und gemessenen Abstände (d1, d2). Ein derartiges Ableiten der Lage des Prüfobjektes aus den ermittelten Abständen (d1, d2) bzw. Abweichungen sind dem Fachmann hierbei bekannt.

Final erfolgt der Schritt des Justierens des Prüfobjektes, der die Krümmungsmittelpunkte mit den Koordinaten (x1, y1) und (x2, y2) in die Krümmungsmittelpunkte auf der z-Achse überführt.

In einer besonders bevorzugten Ausführungsform der Erfindung und insbesondere bei einem Prüfobjekt, das aus mehreren hintereinander angeordneten Teilprüfobjekten besteht, kommt folgendes ergänzende Verfahren zur Anwendung. In einem ersten Verfahrensschritt wird der Zentrierfehler der ersten Prüffläche (x1, y1) ermittelt. In einem darauffolgenden zweiten Verfahrensschritt wird der Zentrierfehler einer dahinterliegenden zweiten Prüffläche unter Berücksichtigung des Zentrierfehlers der ersten Prüffläche ermittelt. In die Berechnung geht insbesondere zusätzlich ein, dass, falls auf eine innen liegende zweite Prüffläche fokussiert werden muss, die Brechung an den Vorgängerflächen berücksichtigt werden muss.

Zusätzliche weitere Ausführungsbeispiele sind Gegenstände der jeweiligen Unteransprüche. Es versteht sich, dass die eben beschriebenen Ausführungsformen in Alleinstellung oder in Kombination untereinander dargestellt werden können.

Vorteilhafte Ausführungsbeispiele der vorliegenden Erfindung werden nachfolgend Bezug nehmend auf die beiliegenden Zeichnungen näher erläutert. Es zeigen:
- Fig. 1: schematischer Aufbau eines erfindungsgemäßen Systems zur Lagebestimmung eines Prüfobjektes;
- Fig. 2: schematischer Aufbau eines weiteren Ausführungsbeispiels eines erfindungsgemäßen Systems zur Lagebestimmung eines Prüfobjektes;

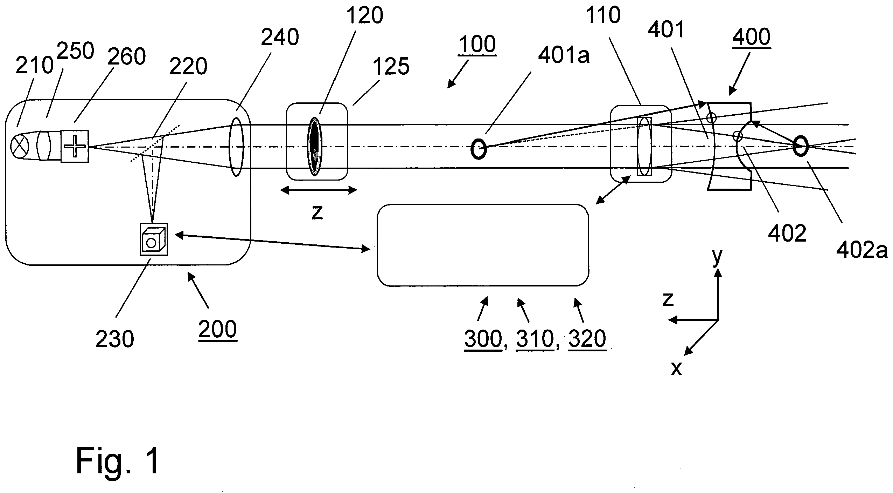

Die Fig. 1 zeigt ein erfindungsgemäßes System 100 zur Lagebestimmung eines Prüfobjektes 400. Dieses System umfasst zumindest ein herkömmliches Autokollimationsfernrohr 200, wie aus dem Stand der Technik hinlänglich bekannt. Ein derartiges Autokollimationsfernrohr 200 weist zumindest eine Strahlquelle 210, einen Strahlteiler 220, eine Detektoreinheit 230 und ein Objektiv 240 auf.

Das Objektiv 240 wirkt hierbei als Kollimatorobjektiv, als auch als Fernrohrobjektiv. Innerhalb der Brennweite des Objektivs 240 ist ein Strahlteiler angeordnet. Dieser teilt den Strahlengang in einen Kollimatorstrahlengang und einen Fernrohrstrahlengang, mit einer Kollimatorbrennebene und einer hierzu konjugierten Fernrohrbrennebene. In der Kollimatorbrennebene ist eine Platte mit einer Messstruktur 260 angeordnet, die durch den Beleuchtungsstrahl einer Lichtquelle 210, über einen Kondensor 250, homogen beleuchtet wird. Die Messstruktur wird über ein Objektiv ins Unendliche projiziert, an einer dem Autokollimationsfernrohr vorgeordneten Prüffläche eines Prüfobjektes 400 reflektiert und zurück durch das Objektiv 240 in die Fernrohrebene abgebildet. Sofern die Prüffläche gegenüber der optischen Achse des Autokollimationsfernrohres nicht verkippt ist, d.h. ihre Flächennormale in Achsrichtung verläuft, wird die Messstruktur 260 quasi in sich selbst auf eine Detektoreinheit 230 abgebildet. In Abhängigkeit vom Verkippungswinkel Alpha wandert die Abbildung der Messstruktur 260 auf der Detektoreinheit 230 aus. Die Veränderung der Position der Messstruktur wird erfindungsgemäß als Abstand d bezeichnet.

Kernstück der Erfindung ist nun eine Fokussiereinrichtung 110, die wie der Fig. 1 deutlich zu entnehmen ist, vor dem Autokollimationsfernrohr angeordnet ist. Die Fokussiereinrichtung 110, das Prüfobjekt 400 und die Strahlquelle sind hierbei entlang einer gemeinsamen optischen Achse (z) angeordnet. Diese Achse steht normal auf eine x-y Ebene.

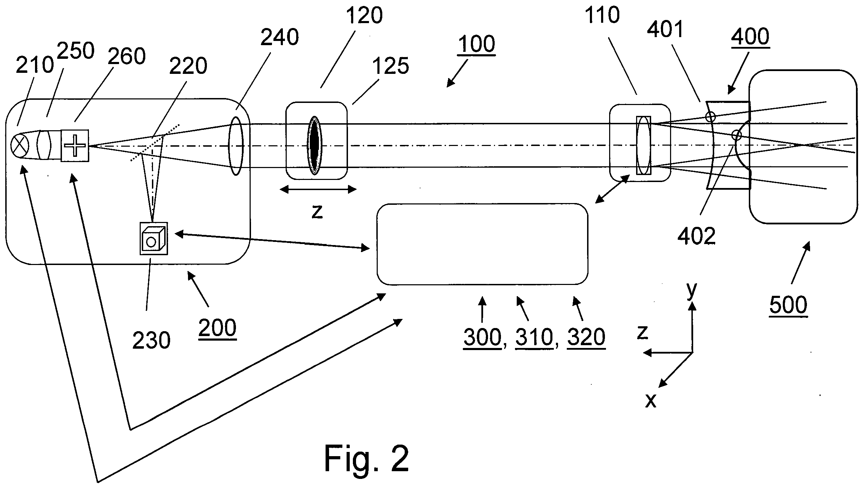

Die Fokussiereinrichtung 110 weist eine als optisches Element ausgebildete elektrische Linse 110 auf. Diese Linse weist somit eine veränderbare Brechkraft auf. Durch diese Linse ist es nun möglich, die Strahlenbündel auf einen Krümmungsmittelpunkt einer ersten Prüffläche 401 mit den Koordinaten (x1, y1) und zeitlich nachfolgend auf einen Krümmungsmittelpunkt einer zweiten Prüffläche 402 mit den Koordinaten (x2, y2) eines Prüfobjektes 400 mittels einer Steuereinheit zu fokussieren. Es sei darauf hingewiesen, dass Fig. 1 das Prüfobjekt bereits im justierten Zustand zeigt. Die Lage der beiden Krümmungsmittelpunkte 401a und 402a ist somit auf der z-Achse. Die Lage der ursprünglichen Krümmungsmittelpunkte mit den Koordinaten (x1, y1) und (x2, y2) ist der Übersichtlichkeit halber in den Fig. 1 und Fig. 2 nicht dargestellt.

Mittels der Steuereinheit 300 kann ein schnelles Umschalten zwischen den beiden Prüfflächen erfolgen. Ein derartiges Umschalten zwischen den beiden Prüfflächen erfolgt im Videotakt mit einer Frequenz von 25 Hz. Somit ist es mit einem derartigen System möglich, die Lage der beiden Krümmungsmittelpunkte der jeweiligen Prüfflächen 401 und 402 quasi gleichzeitig anzumessen und aus den Messwerten die Position des Prüfobjektes 400 zu bestimmen. Die Lage wird durch eine Rechnereinheit 310 bestimmt, die die Messwerte der Krümmungsmittelpunkte der ersten und zweiten Prüfflächen auswertet und daraus eine Lage des Prüfobjektes 400 ableitet. Die aktuelle Lage des Prüfobjektes kann beispielsweise über einen als Darstellungseinheit ausgebildeten Monitor dargestellt werden. Mit Hilfe dieser Informationen kann das Prüfobjekt verschoben bzw. gekippt werden, so dass die Prüfflächen mit ihren Krümmungsmittelpunkten auf der gemeinsamen optischen Achse zum Liegen kommen, wie dies in Fig. 1 gezeigt ist.

Da eine elektrische Linse oftmals nur eine von 0 verschiedene minimale Brechkraft aufweist, ist in dem System 100 zusätzlich eine Vorsatzlinse 120 vorgesehen, die in einer Auswechseleinheit 125 angeordnet ist. Mittels dieser Vorsatzlinse kann das Strahlenbündel "grob" auf das Prüfobjekt voreingestellt werden. Gemäß dem Ausführungsbeispiel ist die Vorsatzlinse 120 entlang der optischen Achse verschiebbar angeordnet, um einen noch größeren Fokussierbereich abzudecken.

Das zweite Ausführungsbeispiel gemäß der Fig. 2 unterscheidet sich vom ersten Ausführungsbeispiel einerseits dahingehend, dass das Prüfobjekt auf einem Drehtisch 500 angeordnet ist, der um die optische Achse (z) drehbar gelagert ist. Somit ist es möglich bei einer Drehung des Prüfobjektes um die optische Achse mehrere Messwerte zu generieren und so die Lagebestimmung des Prüfobjektes zu referenzieren. Ist beispielsweise das Prüfobjekt perfekt zu einer Bezugsachse, z.B. der optischen Achse (z) ausgerichtet, treffen die einzelnen Lichtstrahlen des Strahlenbündels immer unter demselben Winkel auf die Oberfläche des Prüfobjektes. Das heißt, dass auch bei einer Drehung des Prüfobjektes um die Bezugsachse das Bild auf der Detektoreinheit 230 auf derselben Stelle erscheint. Ferner unterscheidet sich das Ausführungsbeispiel gemäß Fig. 2 vom ersten Ausführungsbeispiel gemäß Fig. 1 auch noch dahingehend, dass die Steuereinheit zusätzlich noch die Lichtquelle 210 und die Messstruktur 260 steuert.

Wird nämlich durch die Steuereinheit 300 sehr schnell zwischen den beiden Prüfflächen hin und hergeschaltet, kann das Problem entstehen, dass die Bilder der an den beiden Prüfflächen reflektierten Messstrukturen nicht mehr unterschieden werden können. Das Problem wird erfindungsgemäß dahingehend gelöst, dass die Strahlquelle 210 eine erste Leuc1htdiode mit einer roten Farbe und eine zweite Leuchtdiode mit einer blauen Farbe umfasst, die synchron geschaltet werden. Somit ist eine farbliche Unterscheidung zwischen den beiden Messstrukturen gegeben.

Die visuelle Verbesserung der Darstellung über geschaltete verschiedenfarbige Lichtquellen funktioniert bei der Verwendung eines Okulareinblicks am AKF oder bei der Verwendung einer Farbkamera oder eines Farbmonitors als Darstellungseinheit 320. Damit wird die schlechte Unterscheidbarkeit von z.B. identischen Messstrukturen in der Nähe der direkten Überdeckung überwunden. Diese Aufgabe kann aber auch mittels einer synthetischen Darstellung auf einem Rechnermonitor als Darstellungseinheit 320 erfolgen. In diesem Fall kann eine einfarbige Lichtquelle und eine Monochromkamera als Detektoreinheit 230 verwendet werden. Die Messstrukturen 260 werden in diesem Ausführungsbeispiel durch eine Software mittels der Rechnereinheit 310 anhand ihres zeitlichen Auftretens unterschieden.

Ein weiterer Vorteil bei der direkten Auswertung mittels der Rechnereinheit 310 besteht darin, dass nicht nur die Lage von (mindestens) zwei Messstrukturen 260, gleichbedeutend mit der Lage von (mindestens) zwei Krümmungsmittelpunkten von zwei Prüfflächen dargestellt werden kann. Es ist auch möglich, über die bekannte Berechnung der Lage des Prüfobjektes die dann bekannten Eigenschaften des Prüfobjektes "Dezentrierung" und "Kippung" mit im Videotakt auszugeben.

Alternativ ist es in einer weiteren Ausführungsform auch noch möglich, dass die Messstruktur 260 für die beiden Prüfflächen eine unterschiedliche Form aufweist und ebenfalls synchron umgeschaltet wird. Die Bereitstellung der verschiedenen Messstrukturen erfolgt bevorzugt durch einen Bildgeber.

## Patentansprüche

1. System (100) zur Lagebestimmung eines Prüfobjektes (400) mit einer ersten Prüffläche (401) und einer zweiten Prüffläche (402) umfassend folgende Merkmale:
ein Autokollimationsfernrohr (200) mit
einer Strahlquelle (210) zum Aussenden eines Strahlenbündels;
einem Strahlteiler (220);
einer Detektoreinheit (230) und
einem Objektiv (240);
und einem als Fokussiereinrichtung (110) ausgebildetem optischen Element, wobei das Prüfobjekt (400), die Strahlquelle (210) und die Fokussiereinrichtung (110) entlang einer gemeinsamen optischen Achse (z) angeordnet sind, und einer Steuereinrichtung (300) zum Steuern der Fokussiereinrichtung, die derart ausgebildet ist, dass das Strahlenbündel auf einen Krümmungsmittelpunkt einer ersten Prüffläche (401) des Prüfobjektes (400) mit den Koordinaten (x1, y1) und zumindest auf einen Krümmungsmittelpunkt einer zweite Prüffläche (402) des Prüfobjektes (400) mit den Koordinaten (x2, y2) fokussierbar ist, **dadurch gekennzeichnet, dass** die Fokussiereinrichtung (110) als eine Linse mit einer einstellbaren Brechkraft, insbesondere als elektrische Linse, ausgebildet ist

2. System (100) gemäß Anspruch 1, **dadurch gekennzeichnet, dass** das Autokollimationsfernrohr (200) ferner eine Messstruktur (260) umfasst.

3. System nach einem der vorhergehenden Ansprüche, **dadurch gekennzeichnet, dass** eine weitere Vorsatzlinse (120) entlang der optischen Achse (z) vorgesehen ist, die zwischen dem Objektiv (240) und der Fokussiereinrichtung (110) angeordnet ist.

4. System nach Anspruch 3, **dadurch gekennzeichnet, dass** die Vorsatzlinse (120) in einer Auswechseleinheit (125) angeordnet ist und die Auswechseleinheit (125) zumindest eine weitere zweite Vorsatzlinse umfasst, wobei die erste und die zweite Vorsatzlinse eine unterschiedliche Brechkraft aufweisen.

5. System nach einem der vorhergehenden Ansprüche, **dadurch gekennzeichnet, dass** die Strahlquelle (210) eine erste Leuchtdiode, die Licht mit einer ersten Farbe abstrahlt und eine zweite Leuchtdiode, die Licht mit einer von der ersten Farbe verschiedenen zweiten Farbe abstrahlt, umfasst.

## Claims

1. System (100) for determining the orientation of a test object (400) with a first test surface (401) and a second test surface (402), comprising the following features:
an autocollimator (200) comprising
a beam source (210) for emitting a ray bundle;
a beam splitter (220);
a detector unit (230) and
an objective lens (240);
and an optical element embodied as a focusing device (110), wherein the test object (400), the beam source (210) and the focusing device (110) are arranged along a common optical axis (z),
and a control device (300) for controlling the focusing device, embodied in such a way that the ray bundle is focusable onto a centre of curvature of a first test surface (401) of the test object (400) with the coordinates (x1, y1) and at least onto a centre of curvature of a second test surface (402) of the test object (400) with the coordinates (x2, y2), **characterized in that** the focusing device (110) is embodied as a lens with an adjustable refractive power, in particular an electric lens.

2. System (100) according to Claim 1, **characterized in that** the autocollimator (200) further comprises a measuring structure (260).

3. System according to any one of the preceding claims, **characterized in that** a further auxiliary lens (120) is provided along the optical axis (z), said further auxiliary lens being arranged between the objective lens (240) and the focusing device (110).

4. System according to Claim 3, **characterized in that** the auxiliary lens (120) is arranged in an interchange unit (125) and the interchange unit (125) comprises at least one further second auxiliary lens, wherein the first auxiliary lens and the second auxiliary lens have different refractive powers.

5. System according to any one of the preceding claims, **characterized in that** the beam source (210) comprises a first light-emitting diode, which emits light with a first colour, and a second light-emitting diode, which emits light with a second colour that differs from the first colour.

## Revendications

1. Système (100) de détermination de la position d'un objet à contrôler (400), comprenant une première surface de contrôle (401) et une deuxième surface de contrôle (402), possédant les caractéristiques suivantes :
une lunette d'approche à autocollimation (200) comprenant
une source de rayonnement (210) destinée à émettre un faisceau de rayons ;
un diviseur de rayons (220) ;
une unité de détection (230) et
un objectif (240) ;
et un élément optique réalisé sous la forme d'un dispositif de focalisation (110), l'objet à contrôler (400), la source de rayonnement (210) et le dispositif de focalisation (110) étant disposés le long d'un axe optique (z) commun,
et un dispositif de commande (300) destiné à commander le dispositif de focalisation et qui est configuré de telle sorte que le faisceau de rayons peut être concentré sur un point central de courbure d'une première surface de contrôle (401) de l'objet à contrôler (400) ayant les coordonnées (x1, y1) et au moins sur un point central de courbure d'une deuxième surface de contrôle (402) de l'objet à contrôler (400) ayant les coordonnées (x2, y2), **caractérisé en ce que** le dispositif de focalisation (110) est réalisé sous la forme d'une lentille ayant une réfringence réglable, notamment sous la forme d'une lentille électrique.

2. Système (100) selon la revendication 1, **caractérisé en ce que** la lunette d'approche à autocollimation (200) comporte en outre une structure de mesure (260).

3. Système (100) selon l'une des revendications précédentes, **caractérisé en ce qu'**il existe une lentille additionnelle (120) le long de l'axe optique (z), laquelle est disposée entre l'objectif (240) et le dispositif de focalisation (110).

4. Système (100) selon la revendication 3, **caractérisé en ce que** la lentille additionnelle (120) est disposée dans une unité interchangeable (125) et l'unité interchangeable (125) comprend au moins une deuxième lentille additionnelle supplémentaire, les première et deuxième lentilles additionnelles présentant des réfringences différentes.

5. Système (100) selon l'une des revendications précédentes, **caractérisé en ce que** la source de rayonnement (210) comporte une première diode électroluminescente, qui émet de la lumière ayant une première couleur, et une deuxième diode électroluminescente, qui émet de la lumière ayant une deuxième couleur différente de la première couleur.
